Europäisches Patentamt

European Patent Office

Office européen des brevets

(19)

(11) Veröffentlichungsnummer: **0 380 993**
**A2**

(12) **EUROPÄISCHE PATENTANMELDUNG**

(21) Anmeldenummer: 90101170.0

(22) Anmeldetag: 20.01.90

(51) Int. Cl.⁵: **C08G 18/48, C08G 18/18, C08G 18/22, C08G 18/65, //(C08G18/48,101:00)**

(30) Priorität: 02.02.89 DE 3903100

(43) Veröffentlichungstag der Anmeldung:
08.08.90 Patentblatt 90/32

(84) Benannte Vertragsstaaten:
AT BE CH DE ES FR GB IT LI SE

(71) Anmelder: BAYER AG

D-5090 Leverkusen 1 Bayerwerk(DE)

(72) Erfinder: Brock, Martin, Dr.
Silesiusstrasse 82
D-5000 Köln 80(DE)
Erfinder: Kogelnik, Hans-Joachim, Dr.
124 Rolling Meadow Road
Pittsburgh, PA 15241(US)
Erfinder: Jacobs, Gundolf, Dr.
c/o Mobay Corporation
Pittsburgh, Pa. 15205(US)

(54) **Verfahren zur Herstellung von elastischen und offenzelligen Polyurethan-Weichformschaumstoffen.**

(57) Elastische, offenzellige Polyurethan-Weichformschaumstoffe werden durch Umsetzung von
a) Polyisocyanaten mit
b) mindestens zwei gegenüber Isocyanaten aktive Wasserstoffatome aufweisenden Polyethern vom Molekulargewicht 400 bis 10 000 in Gegenwart von
c) Wasser und gegebenenfalls organischen Treibmitteln und in Gegenwart von
d) Katalysatoren, gegebenenfalls in Gegenwart von
e) Verbindungen mit mindestens zwei gegenüber Isocyanaten reaktionsfähigen Wasserstoffatomen mit einem Molekulargewicht von 32 bis 399 sowie
f) an sich bekannten oberflächenaktiven und flammhemmenden Zusatzstoffen und weiteren an sich bekannten Hilfsmitteln, hergestellt, wobei als Polyether b) solche mit einem Gesamt-Ethylenoxidgehalt von 25 bis 80 Gew.-%, bevorzugt 40 bis 60 Gew.-%, bezogen auf Gesamt-Alkylenoxid, und als Katalysator d) Kohlensäurediamid, Thiokohlensäurediamid bzw. deren Derivate verwendet werden.

EP 0 380 993 A2

## Verfahren zur Herstellung von elastischen und offenzelligen Polyurethan-Weichformschaumstoffen

Heißhärtende Polyurethan-Weichformschaumstoffe finden bekanntlich eine sehr verbreitete Anwendung und werden u.a. im Automobilbereich genutzt. Die Anwendung der Weichformschaumstoffe als Sitz-, Lehnen- oder Kopfpolster wird weitestgehend durch die jeweilige Härte bestimmt. Dementsprechend werden für einige Bereiche sehr geringe Härten spezifiziert.

Die geringen Härten waren bislang im Heißformschaum nur unter Mitverwendung von zusätzlichen physikalischen Treibmitteln (z.B. FCKWs) möglich. Im Zuge umweltpolitischer Diskussionen wird dringend nach Möglichkeiten gesucht, weiche Schaumqualitäten ohne Mitverwendung von FCKWs zu produzieren.

Überraschend wurde nun gefunden, daß bei Verwendung spezieller Polyether bzw. Polyetherabmischungen in Kombination mit Kohlensäurediamid sehr weiche, hoch wertige Schaumstoffe unter ansonsten normalen Produktionsbedingungen hergestellt werden können.

Zwar ist der Gebrauch von Harnstoff oder spezieller Polyether bekannt, aber die Kombination beider Komponenten zur Herstellung weicher Heißformschaumstoffe bislang nicht.

So beschreibt DE-A 27 28 031 die Verwendung von Harnstoff in einer Menge von 0,05 bis 1,0 g je 100 g Polyetherpolyol. Der Harnstoff wird hier in Kombination mit Sorbitvernetzern als Zellöffner zugegeben. Das ist völlig verschieden von der erfindungsgemäßen Anwendung als Katalysator. Zudem beschreibt die DE-A 27 28 031 die Herstellung von Polyurethan-Kaltschaumstoffen, während erfindungsgemäß Heißformschaumstoffe hergestellt werden. Diese beiden Schaumstoffarten unterscheiden sich im Produktions- und Reaktionsablauf so deutlich, daß eine Übertragung von Erkenntnissen nicht ohne weiteres möglich ist.

Die US-PS 29 75 146 beschreibt die Anwendung von Harnstoff im Heißschaum; Harnstoff wird dabei aber in Kombination mit ausschließlich Polyestern eingesetzt. Die Stauchhärte derartiger Schaumstoffe ist recht hoch (50 % Kompression ca. 5 bis 6 kPa).

Im erfindungsgemäßen Verfahren, bei dem die Schaumstoffherstellung in geschlossenen Formen erfolgt, bewirkt der Harnstoff in Kombination mit den Polyethern eine gezielte Beeinflussung der Stauchhärte (Stauchhärte 40 % 1,2 bis 2 kPa).

Die Verschäumung erfolgt nach üblichen Weichformschaumrezepturen mit Polyisocyanaten, vorzugsweise Toluylendiisocyanat, besonders bevorzugt TDI 80.

Gegenstand der Erfindung ist ein Verfahren zur Herstellung von elastischen und offenzelligen Polyurethan-Weichformschaumstoffen durch Umsetzung von

a) Polyisocyanaten mit

b) mindestens zwei gegenüber Isocyanaten aktive Wasserstoffatome aufweisenden Polyethern vom Molekulargewicht 400 bis 10 000 in Gegenwart von

c) Wasser und gegebenenfalls organischen Treibmitteln und in Gegenwart von

d) Katalysatoren, gegebenenfalls in Gegenwart von

e) Verbindungen mit mindestens zwei gegenüber Isocyanaten reaktionsfähigen Wasserstoffatomen mit einem Molekulargewicht von 32 bis 399 sowie

f) an sich bekannten oberflächenaktiven und flammhemmenden Zusatzstoffen und weiteren an sich bekannten Hilfsmitteln, dadurch gekennzeichnet, daß als Polyether b) solche mit einem Gesamt-Ethylenoxidgehalt von 25 bis 80 Gew.-%, bevorzugt 40 bis 60 Gew.-%, bezogen auf Gesamt-Alkylenoxid, und als Katalysator d) Kohlensäurediamid, Thiokohlensäurediamid bzw. deren Derivate verwendet werden.

Eine bevorzugte Ausführungsform des erfindungsgemäßen Verfahrens ist dadurch gekennzeichnet, daß der Katalysator d) in Mengen von 0,05 bis 1,5, bevorzugt 0,2 bis 0,7 Gew.-Teilen, bezogen auf 100 Gew.-Teile der Polyether b), verwendet wird.

Für die Herstellung der Polyurethan-Weichformschaumstoffe werden als Ausgangskomponenten eingesetzt:

a) Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden beispielsweise solche der Formel

$Q(NCO)_n$

in der

$n = 2 - 4$, vorzugsweise 2,

und

Q einen aliphatischen Kohlenwasserstoffrest mit 2 -18, vorzugsweise 6 - 10 C-Atomen,

einen cycloaliphatischen Kohlenwasserstoffrest mit 4 -15, vorzugsweise 5 - 10 C-Atomen,

einen aromatischen Kohlenwasserstoffrest mit 6 -15, vorzugsweise 6 - 13 C-Atomen,

oder einen araliphatischen Kohlenwasserstoffrest mit 8 -15, vorzugsweise 8 - 13 C-Atomen,

bedeuten, z.B. solche Polyisocyanate, wie sie in der DE-OS 2 832 253, Seiten 10 - 11, beschrieben werden.

Bevorzugt werden erfindungsgemäß Polyisocyanate vom Typ des Diphenylmethandiisocyanates und/oder des Toluylendiisocyanats, z.B. das 2,4- und 2,6-Toluylendiisocyanat, sowie beliebige Gemische dieser Isomeren (TDI); 4,4′-und/oder 2,4′-Diphenylmethandiisocyanat (MDI), Hexamethylendiisocyanat und/oder Isophorondiisocyanat, Polyolphenylpolymethylen-polyisocyanate, wie sie durch Anilin-Formaldehyd-Kondensation und anschließende Phosgenierung hergestellt werden ("rohes MDI"), ferner durch Carbodiimidgruppen, Urethangruppen, Allophanatgruppen, Isocyanuratgruppen, Harnstoffgruppen und Biuretgruppen modifizierte Polyisocyanate, die sich von 2,4- und/oder 2,6-Toluylendiisocyanat bzw. vom 4,4′- und/oder 2,4′-Diphenylmethandiisocyanat und/oder Hexamethylendiisocyanat und/oder Isophorondiisocyanat ableiten, ferner alkylsubstituierte MDI-Typen, wie sie beispielsweise in DE-OS 2 935 318 und DE-OS 3 032 128 beschrieben werden.

Als erfindungsgemäß einzusetzende Polyisocyanate kommen vorzugsweise folgende TDI-Typen in Betracht:
-Toluylendiisocyanat als Gemisch der 2,4- und 2,6-Isomeren im Verhältnis 80:20 (T 80)
-Toluylendiisocyanat als Gemisch der 2,4- und 2,6-Isomeren im Verhältnis 65:35 (T 65)
- Toluylendiisocyanat-Prepolymere
- Abmischungen von TDI mit Diphenylmethandiisocyanat und/oder Polyphenylpolymethylen-polyisocyanaten.

b) Polyether mit mindestens zwei gegenüber Isocyanaten reaktionsfähigen Wasserstoffatomen von einem Molekulargewicht in der Regel von 400 - 10,000. Hierunter versteht man neben Aminogruppen, Thiogruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1.000 bis 6.000, (vorzugsweise 2.000 bis 6.000, z.B. mindestens zwei, in der Regel zwei bis acht, vorzugsweise aber 2 bis 6, Hydroxylgruppen aufweisende Polyether, wie sie für die Herstellung von homogenen und von zellförmigen Polyurethanen an sich bekannt sind. Die erfindungsgemäß eingesetzten Polyether bzw. Polyethergemische weisen einen Gesamt-Ethylenoxidgehalt in der Regel von 25 - 80 Gew.-%, bevorzugt 40 - 60 Gew.-% (bezogen auf Gesamtalkylenoxid) auf.

Anteilig (bis zu 50 Gew.%, bezogen auf den Polyether) können auch mindestens zwei Hydroxylgruppen aufweisende Polyester, Polycarbonate, Polylactone und Polyamide vom Molekulargewicht 400 - 10.000 mitverwendet werden.

c) Als Treibmittel wird Wasser, gegebenenfalls unter Mitverwendung von leicht flüchtigen organischen Substanzen, verwendet. Wasser wird dabei vorzugsweise in einer Menge von 1-10 Gew.-Teilen, bezogen auf 100 Gew.-Teile der Komponente b), eingesetzt.

d) Als Katalysator werden erfindungsgemäß Kohlensäurediamid, Thiokohlensäurediamid bzw. deren Derivate, z.B. die Alkylderivate wie α-Methyl-harnstoff, eingesetzt. Diese Katalysatoren werden vorzugsweise in einer Menge von 0,01 bis 1 Gew.-% der Polyetherkomponente b) verwendet. Erfindungsgemäß werden vorzugsweise auch zwei- bis vierwertige Organo-Zinn-Verbindungen als vernetzende Katalysatoren, vorzugsweise Zinn(II)-Salze höherer Carbonsäuren, mitverwendet. Die aus der Polyurethanchemie an sich bekannten Katalysatoren wie tert.-Amine und/oder metallorganische Verbindungen können gegebenenfalls anteilig in den an sich üblichen Mengen mitverwendet werden.

e) Ausgangskomponenten sind gegebenenfalls ferner Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/ oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 -20, beschrieben.

f) Gegebenenfalls mitzuverwenden sind auch oberflächenchenaktive Zusatzstoffe, wie Emulgatoren und Schaumstabilisatoren. Als Emulgatoren sind solche auf Basis alkoxilierter Fettsäuren und höherer Alkohole bevorzugt.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kiesel-

3

gur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Diese Umsetzung erfolgt in geschlossenen Formen. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die nach der Erfindung erhältlichen Weichformschaumstoffe finden z.B. als Sitz-, Lehnen- oder Kopf-Polstermaterial Anwendung.

Ausführungsbeispiele

Die Herstellung von Weichformschaumstoffen erfolgte mit Hilfe einer kontinuierlich arbeitenden Hochdruckmaschine (Fa. Hennecke, Birlinghoven, Siegkreis, Bundesrepublik Deutschland). Verschäumungsrezepturen sowie Prüfwerte der resultierenden Schaumstoffe sind in der folgenden Tabelle angegeben:

Polyether A: trifunktioneller, langkettiger PO/EO-Polyether (ca. 70 % EO,bezogen auf Gesamt-PO/EO, OHZ = 36)

Polyether B: trifunktioneller, langkettiger PO/EO-Polyether (ca. 15 % EO,bezogen auf Gesamt-PO/EO, OHZ = 30)

Polyether C: trifunktioneller, langkettiger PO/EO-Polyether (10 % EO,bezogen auf Gesamt-PO/EO, OHZ = 50)

| Beispiel | 1 | 2 | 3 |
|---|---|---|---|
| Polyether A | 75 | 75 | 70 |
| Polyether B | 25 | - | 30 |
| Polyether C | - | 25 | - |
| Wasser | 3,0 | 3,5 | 3,0 |
| Schaum-Stabilisator OS 25 (Bayer AG) | 1,0 | 1,2 | 0,9 |
| Katalysator 2 | 0,1 | - | - |
| Katalysator 3 | - | 0,5 | 0,2 |
| Katalysator 1 | 0,5 | 0,7 | 0,5 |
| Katalysator 4 | 0,06 | 0,07 | 0,06 |
| TDI 80 | + | + | + |
| Kennzahl | 100 | 100 | 100 |
| Rohdichte (kg/m$^3$) | 30 | 28 | 34 |
| Stauchhärte 40 % (kPa) | 1,4 | 1,0 | 1,4 |
| Zugfestigkeit (kPa) | 95 | 80 | 80 |
| Bruchdehnung (%) | 230 | 200 | 220 |
| Druckverformungsrest 50 % (%) | 5,4 | 6,5 | 6,5 |

- = nicht anwesend im Reaktionsgemisch

+ = anwesend im Reaktionsgemisch

Katalysator 1: Harnstoff

Katalysator 2: Bis-N,N′-dimethylamino-diethylether (70 %ig in Dipropylenglykol)

Katalysator 3: Triethylendiamin (33%ig in Dipropylenglykol)

Katalysator 4: Zinn(II)-octoat

TDI 80: Toluylendiisocyanat, Gemisch aus 2,4- und 2,6-Diisocyanatotoluol im Gew.-Verhältnis 80:20

**Ansprüche**

1. Verfahren zur Herstellung von elastischen, offenzelligen Polyurethan-Weichformschaumstoffen durch Umsetzung von

a) Polyisocyanaten mit

b) mindestens zwei gegenüber Isocyanaten aktive Wasserstoffatome aufweisenden Polyethern vom Molekulargewicht 400 bis 10 000 in Gegenwart von

c) Wasser und gegebenenfalls organischen Treibmitteln und in Gegenwart von

d) Katalysatoren, gegebenenfalls in Gegenwart von

e) Verbindungen mit mindestens zwei gegenüber Isocyanaten reaktionsfähigen Wasserstoffatomen mit einem Molekulargewicht von 32 bis 399 sowie

f) an sich bekannten oberflächenaktiven und flammhemmenden Zusatzstoffen und weiteren an sich bekannten Hilfsmitteln,

dadurch gekennzeichnet, daß als Polyether b) solche mit einem Gesamt-Ethylenoxidgehalt von 25 bis 80 Gew.-%, bevorzugt 40 bis 60 Gew.-%, bezogen auf Gesamt-Alkylenoxid, und als Katalysator d) Kohlensäurediamid, Thiokohlensäurediamid bzw. deren Derivate verwendet werden.

2. Verfahren nach Anspruch 1, dadurch gekennzeichnet, daß der Katalysator d) in Mengen von 0,05 bis 1,5, bevorzugt 0,2 bis 0,7 Gew.-Teilen, bezogen auf 100 Gew.-Teile der Polyether b), verwendet wird.

3. Verfahren nach Anspruch 1 und 2, dadurch gekennzeichnet, daß zwei- bis vierwertige Organo-Zinnverbindungen als vernetzende Katalysatoren, vorzugsweise Zinn(II)-Salze höherer Carbonsäuren, mitverwendet werden.